# EUROPÄISCHE PATENTSCHRIFT

(11) **EP 4 171 329 B1**
(45) Veröffentlichungstag und Bekanntmachung des Hinweises auf die Patenterteilung: **24.01.2024**
(21) Anmeldenummer: 22731203.0
(22) Anmeldetag: 31.05.2022
(51) Int. Cl.: A47J 31/44

(54) **AUFSCHÄUMEINHEIT ZUM AUFSCHÄUMEN VON MILCH ODER MILCH/LUFT-GEMISCHEN SOWIE DIESE ENTHALTENDER GETRÄNKEBEREITER**
FROTHING UNIT FOR FROTHING MILK OR MILK/AIR MIXTURES, AND BEVERAGE MAKER CONTAINING SAME
UNITÉ DE MOUSSAGE POUR FAIRE MOUSSER DU LAIT OU DES MÉLANGES LAIT/AIR, ET DISPOSITIF DE PRÉPARATION DE BOISSON LE CONTENANT

(30) Priorität: 02.06.2021 DE 102021205640
(43) Veröffentlichungstag der Anmeldung: 03.05.2023
(73) Patentinhaber: WMF GmbH, 73312 Geislingen/Steige (DE)
(72) Erfinder: CASADO, Sebastian, 73111 Lauterstein (DE); BÖNSCH, Torsten, 73312 Geislingen/Steige (DE); MORGENTHALER, Bruno, 4937 Ursenbach (CH); ZIMMERMANN, Andreas, 4537 Wiedlisbach (CH)
(74) Vertreter: Pfenning, Meinig & Partner mbB
(86) Internationale Anmeldenummer: PCT/EP2022/064807
(87) Internationale Veröffentlichungsnummer: WO 2022/253853

(56) Entgegenhaltungen:
- EP-A1- 2 965 671
- WO-A1-2012/107357
- WO-A1-2021/032322
- US-A1- 2013 019 903
- US-A1- 2017 238 755

## Beschreibung

Die vorliegende Erfindung betrifft eine Aufschäumeinheit zum Aufschäumen von Milch oder Milch/Luft-Gemischen mit einer Dampfzuleitung mit einer Dampfdüse, einer Milchzuleitung, einer Mischeinheit mit einem ersten Strömungsbereich und einem zweiten Strömungsbereich sowie eine sich an den zweiten Strömungsbereich anschließende Auslassleitung mit Auslassöffnung für den Milchschaum.

Aus dem Stand der Technik sind verschiedene Aufschäumsysteme bekannt, bei denen Milch über einen durch Dampf erzeugten Venturieffekt angesaugt, durch Kondensation des Dampfes erhitzt und anschließend in einer Schäumkammer mit Luft verwirbelt wird, um Milchschaum zu erzeugen. Solche Systeme sind in DE 44 45 436 C2, EP 2 229 851 B1 und EP 1 785 074 B1 beschrieben. Zur Erhöhung der Dosiergenauigkeit der Milch werden Schlauch- oder Zahnradpumpen zum Ansaugen der Milch verwendet.

Diese auf dem Venturi-Effekt basierende Systeme zeigen aber den Nachteil schwankender Milchmengen und Schaumqualitäten, da bei der Nutzung des Venturi-Effekts gewissen Schwankungen auftreten können. Zudem erfordern diese Systeme zwingend eine separate Schäumkammer.

Andere aus dem Stand der Technik bekannte Systeme verwenden angetriebene Rührer um ein Milch-, Luft-, Dampfgemisch aufzuschäumen (EP 2 326 224 B1). Bei Aufschäumsystemen mit Zahnradpumpen, dienen die Zahnräder auch gleichzeitig als Rührer um das Milch-, Luft-, Dampfgemisch aufzuschäumen. Systeme mit angetriebenen Rührer haben aber einen größeren apparativen Aufwand und sind auf Grund der verschiedenen Bauteile nicht einfach zu reinigen, was zu einem höheren Hygienerisiko und Reinigungsaufwand führt. Bei diesen Systemen bilden das Pumpengehäuse und die Zahnräder die Schäumkammer.

Weiterhin gibt es auch Systeme bei denen das Milch-, Luft-, Dampfgemisch durch eine Pumpe mit Druck durch eine Düse gepresst wird, wo es dann stromabwärts der Düse durch den Druckabfall aufschäumt. Diese Systeme sind aus EP 2 294 952 B1 und EP 3649 904 A1 bekannt.

Bei diesen Systemen müssen die Düsen aufwändig gereinigt werden, um Anhaftungen und zusetzen der Düse in Pausenzeiten zu verhindern. Dies würde die Milchschaumbildung negativ beeinflussen oder zu großen Schwankungen in der Milchschaumqualität führen.

Darüber hinaus gibt es noch statische Mischer mit denen Luft, Milch und Dampf vermischt wird, um Milchschaum zu erzeugen (EP 2 042 063 A1). Statische Mischer haben zwar keine bewegten Teile, aber weisen eine große Anzahl von Ecken, Kanten und Toträumen auf, welche ebenfalls nur sehr schwer zu reinigen sind. WO 2012/107357 A1 offenbart eine Aufschäumeinheit gemäss dem Oberbegriff des Anspruchs 1.

Ausgehend hiervon war es Aufgabe der vorliegenden Erfindung, eine Aufschäumeinheit bereitzustellen, die die Nachteile des Standes der Technik ausräumt und eine homogene Schaumqualität ermöglicht bei gleichzeitigem niedrigen apparativen Aufwand und Reinigungsbedarf.

Diese Aufgabe wird durch die Aufschäumeinheit mit den Merkmalen des Anspruchs 1 und den Getränkebereiter mit den Merkmalen des Anspruchs 14 gelöst. Die weiteren abhängigen Ansprüche zeigen vorteilhafte Weiterbildungen auf.

Erfindungsgemäß wird eine Aufschäumeinheit zum Aufschäumen von Milch oder einem Milch/Luft-Gemisch bereitgestellt, die folgende Komponenten enthält:
- eine Dampfzuleitung zum Zuführen von Dampf oder einem Dampf-Luft-Gemisch enthaltend eine Dampfdüse mit einem Düsenaustritt,
- eine Milchzuleitung zum Zuführen von Milch oder einem Milch-Luft-Gemisch,
- eine Mischeinheit in Form eines Hohlprofils mit einem ersten Strömungsbereich mit einer inneren Querschnittsfläche und einem zweiten Strömungsbereich mit einer inneren Querschnittsfläche, wobei die innere Querschnittsfläche des zweiten Strömungsbereichs kleiner als die innere Querschnittsfläche des ersten Strömungsbereichs ist,
- eine sich unmittelbar an den zweiten Strömungsbereich anschließende Auslassleitung mit einer Auslassöffnung für den Milchschaum.

Die Mischeinheit ist dabei in Form eines Schlauches ausgebildet. Das Hohlprofil weist dabei eine definierte innere Querschnittsfläche auf.

Die Dampfzuleitung, die Milchzuleitung und die Mischeinheit sind über ein Verbindungselement, insbesondere ein 3-Wege-Verbindungselement, bevorzugt ein T-Stück, miteinander verbunden und die Dampfdüse ist axial zur Mischeinheit ausgerichtet.

In dem Verbindungselement werden Dampf/Luft und Milch zusammengeführt. Der Luft-Dampfstrahl wird über eine Düse in das Verbindungselement geleitet, senkrecht hierzu wird die Milch zugeleitet. Alternativ ist es auch möglich, die Luft der Milch und nicht dem Dampf zuzuführen oder die Luft der Milch und dem Dampf zuzuführen.

In dem nachfolgenden ersten Strömungsbereich umschließt ein gleichmäßiger Mantelstrom aus Milch den Dampfstrahl, welcher eine hohe Relativgeschwindigkeit gegenüber der Milch hat und somit kleinste Luftbläschen in die Milch drückt. Durch Kondensation des Dampfes findet eine Erwärmung des Milch/Luft-Gemisches statt. Danach folgt in der Mischeinheit ein zweiter Strömungsbereich mit einem kleineren Querschnitt gegenüber dem ersten Strömungsbereich, wobei in dem zweiten Strömungsbereich eine weitere Durchmischung und Homogenisierung des Schaums stattfindet.

Mit der erfindungsgemäßen Aufschäumeinheit ist es möglich einen einfacher apparativen Aufbau bestehend aus einem Verbindungselement und einer Dampfdüse zu realisieren, bei der keine weiteren Motoren oder bewegliche Bauteile erforderlich sind. Zudem kann auf den Einsatz einer Schäumkammer verzichtet werden. Die erfindungsgemäße Aufschäumeinheit stellt zusätzlich eine einfach zu reinigende Einheit dar.

Vorzugsweise ist die Dampfdüse axial zur Dampfzuleitung im Verbindungselement positioniert, wobei der Düsenaustritt im Bereich der Milchzuleitung angeordnet ist, so dass im ersten Strömungsbereich der Mischeinheit der Dampfstrahl zylindrisch von einem Mantelstrom aus Milch umschlossen ist. Der Düsenaustritt ist bevorzugt stromabwärts vom Dampfstrom angeordnet, es ist aber auch möglich, dass der Düsenaustritt in der Verlängerung des Zentrums der Milchzuleitung angeordnet ist.

Eine bevorzugte Ausführungsform sieht vor, dass der erste Strömungsbereich eine innere Querschnittsfläche im Bereich von 7 bis 20 mm² aufweist und/oder der zweite Strömungsbereich eine innere Querschnittsfläche im Bereich von 3 bis 7 mm² und/oder eine Länge im Bereich von 300 bis 700 mm aufweist.

Es ist bevorzugt, dass das Verhältnis von innerer Querschnittsfläche des zweiten Strömungsbereichs zu innerer Querschnittsfläche des ersten Strömungsbereichs bevorzugt von 1:1 bis 1:7, bevorzugt von 1:1,5 bis 1:4 beträgt und/oder das Verhältnis der Länge des ersten Strömungsbereich zu Länge des zweiten Strömungsbereichs bevorzugt von 1:1 bis 1:60, bevorzugt von 1:5 bis 1:20 beträgt.

Weiterhin ist es bevorzugt, dass der erste Strömungsbereich und der zweite Strömungsbereich einstückig ausgebildet sind oder der erste Strömungsbereich und der zweite Strömungsbereich mit einem Verbindungselement, insbesondere einem 2-Wege-Verbindungselement oder einem 3-Wege-Verbindungselement, bevorzugt ein T-Stück, miteinander verbunden sind.

Die Aufschäumeinheit weist bevorzugt mindestens einen Temperatursensor auf, mit dem die Temperatur von Milch und/oder Dampf bestimmbar ist. Dieser mindestens eine Temperatursensor kann dabei unmittelbar an dem Verbindungselement zwischen erstem und zweitem Strömungsbereich oder stromabwärts von diesem Verbindungselement angeordnet sein. Die Bestimmung der Temperatur wird verwendet um eine vorgegebene Zieltemperatur des Milchschaums einzustellen bzw. zu erreichen. Ist die Temperatur zu niedrig wird die Förderleistung der für den Transport der Milch verwendeten Pumpe verringert, um mehr Dampf in die Milch zu leiten. Ist die Temperatur zu hoch wird die Förderleistung der für den Transport der Milch verwendeten Pumpe erhöht. Alternativ kann auch eine Veränderung der Dampfmenge über ein Ventil in der Dampfzuleitung realisiert werden. Auf diese Weise wird somit das Mengenverhältnis Dampf zu Milch geregelt.

Erfindungsgemäss bestehen die Milchzuleitung und die Mischeinheit aus einem Schlauch, bevorzugt aus einem Kunststoff, besonders bevorzugt aus einem Fluorpolymer, insbesondere ausgewählt aus der Gruppe bestehend aus PTFE, PFA, FEP und Kombinationen hiervon.

Die Mischeinheit weist vorzugsweise einen zylindrischen, rechteckigen oder ovalen Querschnitt auf.

Es ist bevorzugt, dass in der Milchzuleitung eine Pumpe zum Transport der Milch angeordnet ist.

Vorzugsweise ist die Dampfzuleitung mit einer Dampferzeugungseinheit verbunden und/oder in der Dampfzuleitung ein Ventil zur Steuerung des Dampfstroms angeordnet.

Die Milchzuleitung ist vorzugsweise mit einem Milchreservoir oder mit einem Reservoir für eine Reinigungsflüssigkeit verbindbar.

Es ist bevorzugt, dass die Auslassleitung einen sich in Richtung der Auslassöffnung erweiterten Innendurchmesser und besonders bevorzugt eine konische Geometrie aufweist.

Die Auslassleitung ist vorzugsweise aus einem thermoplastischen oder elastomeren Kunststoff gebildet. Dabei sind thermoplastische oder elastomere Kunststoffe mit einer Zulassung für Lebensmittelkontakt z.B. gemäß der Verordnungen (EG) Nr. 1935/2004 und (EU) Nr. 10/2011 bevorzugt, insbesondere Polyvinylidenfluorid (PVDF), Polypropylene (PP), Polyoxymethylene (POM) oder Silikon. Es ist bevorzugt, dass die Auslassleitung eine Länge im Bereich von 40 bis 80 mm aufweist und/oder einen Innendurchmesser an dem an die Mischeinheit angrenzenden Ende im Bereich von 2 bis 4 mm und/oder einen Innendurchmesser an der Auslassöffnung im Bereich von 3 bis 8 mm aufweist.

Zudem ist es bevorzugt, dass die Auslassleitung im Wesentlichen senkrecht zur Mischeinheit, besonders bevorzugt mit einem Winkel von 90°, angeordnet ist und das an die Mischeinheit angrenzende Ende der Auslassleitung als Prallfläche fungiert.

Um bei der Ausgabe eine gleichmäßigen Milch- bzw. Schaumfluss ohne Spritzen zu erreichen wird zuletzt eine Auslassleitung durchlaufen. Diese beginnt bevorzugt mit einem 90° Winkel, welcher als Prallfläche dient. Danach folgt ein konischer Teil mit sich zur Auslassleitung aufweitendem Querschnitt. Der 90° Winkel ist von Vorteil für das Gesamtergebnis, muss aber nicht zwingend verwendet werden. Er dient zur Verkürzung der Auslassleitung.

Die Auslassleitung dient der Erzeugung eines laminaren Milchschaumstrahls mit reduzierter Fließgeschwindigkeit um bei der Ausgabe, d.h. beim Auftreffen auf dem Tassenboden, keine weiteren Luftblasen durch Verwirbelung, bzw. Spritzer in den Milchschaum einzubringen. Diese Luftblasen würden recht groß sein und sich sichtbar oben auf dem Milchschaum ansammeln.

Die erfindungsgemäße Aufschäumeinheit zeichnet sich dadurch aus, dass auf eine Schäumkammer, wie sie gemäß dem Stand der Technik eingesetzt wird, verzichtet werden kann, wodurch der apparative Aufwand deutlich reduziert werden kann.

Erfindungsgemäß wird ebenso ein Getränkebereiter, insbesondere eine Kaffeemaschine bereitgestellt, die die zuvor beschriebene Aufschäumeinheit aufweist. Auch für diesen Getränkebereiter kann somit auf eine separate Schäumkammer verzichtet werden.

Anhand der nachfolgenden Figuren soll die erfindungsgemäße Aufschäumeinheit näher erläutert werden, ohne diese auf die hier gezeigten spezifischen Ausführungsformen einzuschränken.
- Fig. 1: zeigt eine erste Variante einer erfindungsgemäßen Aufschäumeinheit
- Fig. 2: zeigt eine weitere Variante einer erfindungsgemäßen Aufschäumeinheit mit einem Temperatursensor
- Fig. 3: zeigt eine dritte Variante einer erfindungsgemäßen Aufschäumeinheit mit einem Temperatursensor

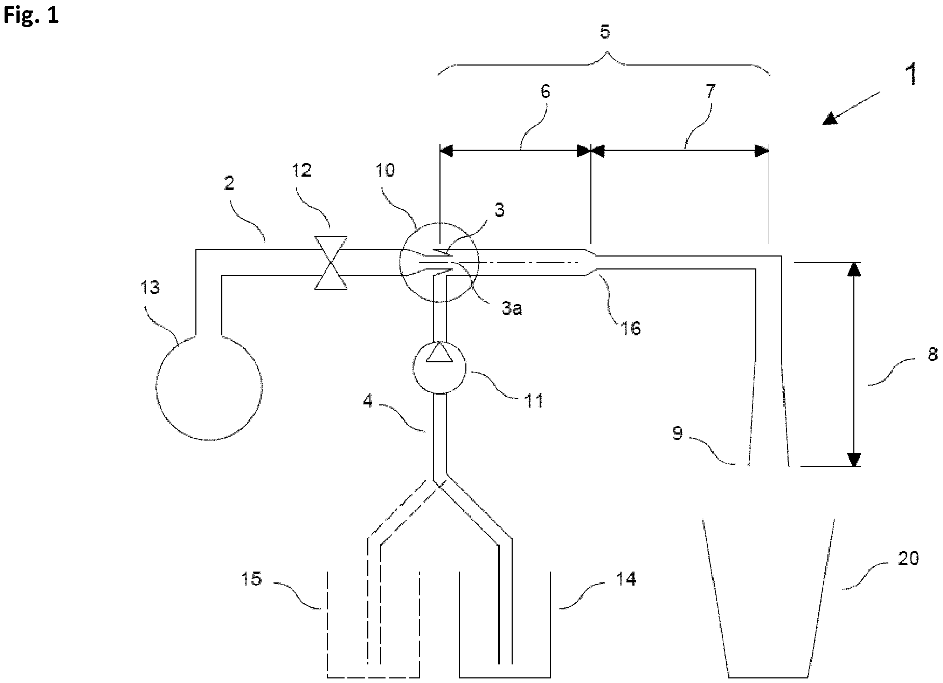

In Fig. 1 ist eine Aufschäumeinheit 1 dargestellt, deren zentrales Element eine Mischeinheit 5 mit einem ersten Strömungsbereich 6 und einem zweiten Strömungsbereich 7 darstellt.

Der erste Strömungsbereich 6 steht dabei über einer Dampfzuleitung 2 in Verbindung mit einer Dampferzeugungseinheit 13. Die Dampfzuleitung 2 weist zusätzlich ein Ventil 12 zur Steuerung des Dampfstroms auf. Die Dampfzuleitung 2 ist über ein 3-Wege-Verbindungselement 10 mit dem ersten Strömungsbereich 6 verbunden, wobei der Dampfstrom über eine Düse 3 mit einem Düsenaustritt 3a in den ersten Strömungsbereich geleitet wird.

Eine Milchzuleitung 4, die zu einem Milchreservoir 14 führt, ist über die weitere Abzweigung des 3-Wege-Verbindungselements 10 angeschlossen. Die Pumpe 11 wird für den Transport der Milch vom Milchreservoir 14 durch die Milchzuleitung 4 zum 3-Wege-Verbindungselement 10 eingesetzt. Die Milchzuleitung 4 trifft nun im Wesentlichen senkrecht auf die Dampfdüse 3, wobei die Milch den Dampfstrom, der aus dem Düsenaustritt 3a austritt, als Mantelstrom umhüllt und durch den ersten Strömungsbereich 6 führt. Aufgrund der hohen Relativgeschwindigkeit des Dampfstrahls gegenüber der zugeleiteten Milch werden kleinste Luftbläschen in die Milch gedrückt, es kommt zum Aufschäumen. Die Kondensation des Dampfes bewirkt nun eine Erwärmung des Milch/Luft-Gemisches.

Der Aufbau der Mischeinheit sieht an der Verbindung 16 des ersten Strömungsbereichs 6 mit dem zweiten Strömungsbereich 7 eine Verengung des Durchmessers des ersten Strömungsbereichs 6 gegenüber dem zweiten Strömungsbereich 7 vor. Diese Verengung stellt einen Strömungswiderstand dar und ermöglicht eine weitere Durchmischung und Homogenisierung des Milchschaums im zweiten Strömungsbereich 7.

Der gebildete Schaum wird anschließend über die Auslassleitung 8, die eine Auslassöffnung 9 aufweist, zum Getränkebehälter 20, zum Beispiel ein Becher, geleitet. Die Auslassleitung besitzt hier einen konischen Aufbau mit sich verbreitertem Querschnitt, wodurch eine gleichmäßige Ausgabe des Schaums ohne Spritzen ermöglicht wird.

Als Alternative ist in Fig. 1 die Möglichkeit dargestellt, dass anstelle des Milchreservoirs 14 ein Reservoir mit Reinigungsflüssigkeit 15 angeschlossen wird. Hierdurch wird ermöglicht, dass über die Milchzuleitung 4 keine Milch, sondern Reinigungsflüssigkeit zur Mischeinheit 5 geleitet wird, was eine einfache Möglichkeit der Reinigung des Systems erlaubt.

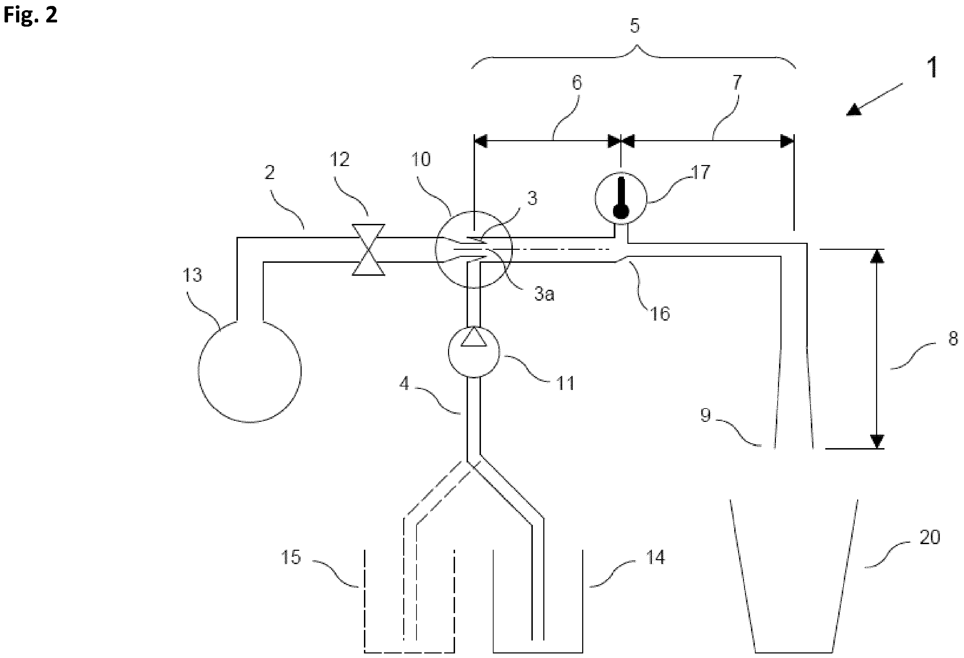

Die in Fig. 2 dargestellte Variante entspricht im Wesentlichen der Variante nach Fig. 1, wobei hier an der Verbindung vom ersten Strömungsbereich 6 zum zweiten Strömungsbereich 7 ein Verbindungselement 16 angeordnet ist, dass zusätzlich einen Temperatursensor 17 zur Bestimmung der Temperatur des Milchschaums am Übergang vom ersten Strömungsbereich 6 zum zweiten Strömungsbereich 7 aufweist.

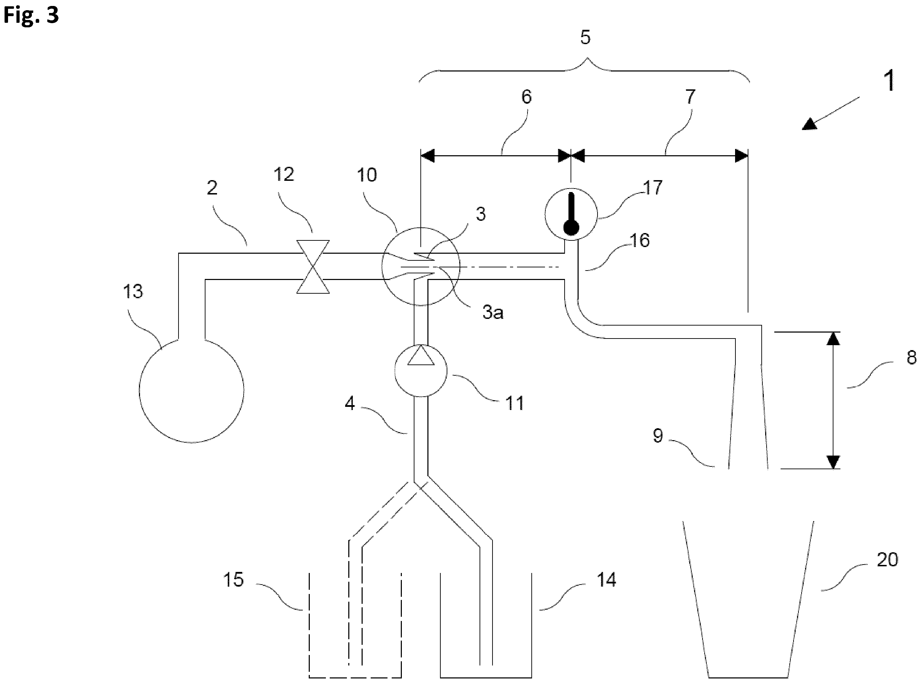

Die in Fig.3 dargestellte Variante entspricht im Wesentlichen dem Aufbau der Variante nach Fig. 2, wobei hier der Übergang vom ersten Strömungsbereich 6 zum zweiten Strömungsbereich 7 durch ein 3-Wege-Verbindungselement 16 realisiert ist. An der dritten Abzweigung dieses Verbindungselementes 16 ist hier ein Temperatursensor zur Bestimmung der Temperatur des Milchschaums angeordnet.

## Patentansprüche

1. Aufschäumeinheit (1) zum Aufschäumen von Milch oder einem Milch/Luft-Gemisch, enthaltend
• eine Dampfzuleitung (2) zum Zuführen von Dampf oder einem Dampf-Luft-Gemisch enthaltend eine Dampfdüse (3) mit einem Düsenaustritt (3a),
• eine Milchzuleitung (4) zum Zuführen von Milch oder einem Milch-Luft-Gemisch,
• eine Mischeinheit (5) in Form eines Hohlprofils mit einem ersten Strömungsbereich (6) mit einer inneren Querschnittsfläche und einem zweiten Strömungsbereich (7) mit einer inneren Querschnittsfläche, wobei die innere Querschnittsfläche des zweiten Strömungsbereichs (7) kleiner als die innere Querschnittsfläche des ersten Strömungsbereichs (6) ist,
• eine sich unmittelbar an den zweiten Strömungsbereich (7) anschließende Auslassleitung (8) mit einer Auslassöffnung (9) für den Milchschaum,
wobei die Dampfzuleitung (2), die Milchzuleitung (4) und die Mischeinheit (5) über ein 3-Wege-Verbindungselement (10) miteinander verbunden sind und die Dampfdüse (3) axial zur Mischeinheit (5) ausgerichtet ist,
**dadurch gekennzeichnet, dass** die Milchzuleitung (4) und die Mischeinheit (5) aus einem Schlauch bestehen,
wobei der erste Strömungsbereich (6) der Mischeinheit (5) eine Länge im Bereich von 20 bis 100 mm aufweist, und
wobei der zweite Strömungsbereich (7) der Mischeinheit (5) eine Länge im Bereich von 100 bis 1200 mm aufweist.

2. Aufschäumeinheit (1) nach Anspruch 1, **dadurch gekennzeichnet, dass** die Dampfdüse(3) axial ausgerichtet zur Dampfzuleitung (2) im 3-Wege-Verbindungselement (10) positioniert ist, wobei der Düsenaustritt (3a) im Bereich der Milchzuleitung (4) angeordnet ist, so dass im ersten Strömungsbereich (6) der Mischeinheit (5) der Dampfstrahl zylindrisch von einem Mantelstrom aus Milch umschlossen ist.

3. Aufschäumeinheit (1) nach einem der Ansprüche 1 oder 2, **dadurch gekennzeichnet, dass** das 3-Wege-Verbindungselement (10) ein T-Stück ist.

4. Aufschäumeinheit (1) nach einem der Ansprüche 1 bis 3, **dadurch gekennzeichnet, dass** der erste Strömungsbereich (6) eine innere Querschnittsfläche im Bereich von 7 bis 20 mm² aufweist und/oder der zweite Strömungsbereich (7) eine innere Querschnittsfläche im Bereich von 3 bis 7 mm² aufweist.

5. Aufschäumeinheit (1) nach einem der Ansprüche 1 bis 4, **dadurch gekennzeichnet, dass** das Verhältnis von innerer Querschnittsfläche des zweiten Strömungsbereichs (7) zu innerer Querschnittsfläche des ersten Strömungsbereichs (6) von 1:1 bis 1:7, bevorzugt von 1:1,5 bis 1:4 beträgt
und/oder das Verhältnis der Länge des ersten Strömungsbereich (6) zu Länge des zweiten Strömungsbereichs (7) von 1:1 bis 1:60, bevorzugt von 1:5 bis 1:20 beträgt.

6. Aufschäumeinheit (1) nach einem der Ansprüche 1 bis 5, **dadurch gekennzeichnet, dass** der erste Strömungsbereich (6) und der zweite Strömungsbereich (7) einstückig ausgebildet sind oder der erste Strömungsbereich (6) und der zweite Strömungsbereich (7) mit einem Verbindungselement (16), insbesondere einem 2-Wege-Verbindungselement oder einem 3-Wege-Verbindungselement, bevorzugt ein T-Stück, miteinander verbunden sind.

7. Aufschäumeinheit (1) nach einem der Ansprüche 1 bis 6, **dadurch gekennzeichnet, dass** die Aufschäumeinheit (1)
i) mindestens einen Temperatursensor (17) aufweist, mit dem die Temperatur von Milch und/oder Dampf bestimmbar ist, wobei der Temperatursensor (17) bevorzugt unmittelbar an dem Verbindungselement (16) zwischen erstem und zweitem Strömungsbereich oder stromabwärts von diesem Verbindungselement (16) angeordnet ist; und/oder
ii) keine Schäumkammer aufweist.

8. Aufschäumeinheit (1) nach einem der Ansprüche 1 bis 7, **dadurch gekennzeichnet, dass** der Schlauch der Milchzuleitung (4) und der Mischeinheit (5) aus einem Kunststoff besteht, besonders bevorzugt aus einem Fluorpolymer, insbesondere ausgewählt aus der Gruppe bestehend aus PTFE, PFA, FEP und Kombinationen hiervon.

9. Aufschäumeinheit (1) nach einem der Ansprüche 1 bis 8, **dadurch gekennzeichnet, dass** die Mischeinheit (5) einen zylindrischen, rechteckigen oder ovalen Querschnitt aufweist.

10. Aufschäumeinheit (1) nach einem der Ansprüche 1 bis 9, **dadurch gekennzeichnet, dass** in der Milchzuleitung (4) eine Pumpe (11) zum Transport der Milch angeordnet ist.

11. Aufschäumeinheit (1) nach einem der Ansprüche 1 bis 10, **dadurch gekennzeichnet, dass** die Dampfzuleitung (2) mit einer Dampferzeugungseinheit (13) verbunden ist und in der Dampfzuleitung (2) ein Ventil (12) zur Steuerung des Dampfstroms angeordnet ist.

12. Aufschäumeinheit (1) nach einem der Ansprüche 1 bis 11, **dadurch gekennzeichnet, dass** die Milchzuleitung (4) mit einem Milchreservoir (14) oder mit einem Reservoir (15) für eine Reinigungsflüssigkeit verbindbar ist.

13. Aufschäumeinheit (1) nach einem der Ansprüche 1 bis 12, **dadurch gekennzeichnet, dass** die Auslassleitung (8)
i) einen sich in Richtung der Auslassöffnung (9) erweiterten Innendurchmesser und bevorzugt eine konische Geometrie aufweist und die Auslassleitung (8) bevorzugt aus einem Kunststoff gebildet ist; und/oder
ii) eine Länge im Bereich von 40 bis 80 mm aufweist und/oder einen Innendurchmesser an dem an die Mischeinheit (5) angrenzenden Ende im Bereich von 2 bis 4 mm und/oder einen Innendurchmesser an der Auslassöffnung (9) im Bereich von 3 bis 8 mm aufweist; und/oder
iii) im Wesentlichen senkrecht zur Mischeinheit (5), bevorzugt mit einem Winkel von 90°, angeordnet ist und das an die Mischeinheit (5) angrenzende Ende der Auslassleitung (8) als Prallfläche fungiert.

14. Getränkebereiter, insbesondere Kaffeemaschine, enthaltend eine Aufschäumeinheit nach einem der Ansprüche 1 bis 13.

15. Getränkebereiter nach Anspruch 14, **dadurch gekennzeichnet, dass** der Getränkebereiter keine Schäumkammer aufweist.

## Claims

1. A frothing unit (1) for frothing milk or a milk-air mixture, comprising
• a steam supply line (2) for supplying steam or a steam-air mixture, comprising a steam nozzle (3) having a nozzle outlet (3a),
• a milk supply line (4) for supplying milk or a milk-air mixture,
• a mixing unit (5) in the form of a hollow profile having a first flow region (6) having an inner cross-sectional area and a second flow region (7) having an inner cross-sectional area, the inner cross-sectional area of the second flow region (7) being smaller than the inner cross-sectional area of the first flow region (6),
• an outlet line (8), which directly adjoins the second flow region (7), having an outlet opening (9) for the milk froth,
wherein the steam supply line (2), the milk supply line (4) and the mixing unit (5) are connected to one another via a 3-way connecting element (10), and the steam nozzle (3) is aligned axially with the mixing unit (5),
**characterized in that** the milk supply line (4) and the mixing unit (5) consist of a hose,
wherein the first flow region (6) of the mixing unit (5) has a length in the range from 20 to 100 mm, and
wherein the second flow region (7) of the mixing unit (5) has a length in the range from 100 to 1200 mm.

2. The frothing unit (1) according to claim 1, **characterized in that** the steam nozzle (3) is positioned aligned axially with the steam supply line (2) in the 3-way connecting element (10), wherein the nozzle outlet (3a) is arranged in the region of the milk supply line (4), so that in the first flow region (6) of the mixing unit (5), the steam jet is cylindrically surrounded by a sheath flow of milk.

3. The frothing unit (1) according to any one of claims 1 or 2, **characterized in that** the 3-way connecting element (10) is a T-piece.

4. The frothing unit (1) according to any one of claims 1 to 3, **characterized in that** the first flow region (6) has an inner cross-sectional area in the range from 7 to 20 mm²
and/or the second flow region (7) has an inner cross-sectional area in the range from 3 to 7 mm².

5. The frothing unit (1) according to any one of claims 1 to 4, **characterized in that** the ratio of the inner cross-sectional area of the second flow region (7) to the inner cross-sectional area of the first flow region (6) is from 1:1 to 1:7, preferably from 1:1.5 to 1:4
and/or the ratio of the length of the first flow region (6) to length of the second flow region (7) is preferably from 1:1 to 1:60, preferably from 1:5 to 1:20.

6. The frothing unit (1) according to any one of claims 1 to 5, **characterized in that** the first flow region (6) and the second flow region (7) are formed in one piece or the first flow region (6) and the second flow region (7) are connected to one another by a connecting element (16), in particular a 2-way connecting element or a 3-way connecting element, preferably a T-piece.

7. The frothing unit (1) according to any one of claims 1 to 6, **characterized in that** the frothing unit (1)
i) has at least one temperature sensor (17) with which the temperature of milk and/or steam can be determined, wherein the temperature sensor (17) is arranged directly at the connecting element (16) between the first and second flow region or downstream of said connecting element (16); and/or
ii) has no frothing chamber.

8. The frothing unit (1) according to any one of claims 1 to 7, **characterized in that** the hose of the milk supply line (4) and the mixing unit (5) is made of a plastic, particularly preferably is made of a fluoropolymer, in particular selected from the group consisting of PTFE, PFA, FEP and combinations thereof.

9. The frothing unit (1) according to any one of claims 1 to 8, **characterized in that** the mixing unit (5) has a cylindrical, rectangular or oval cross-section.

10. The frothing unit (1) according to any one of claims 1 to 9, **characterized in that** a pump (11) for transporting the milk is arranged in the milk supply line (4).

11. The frothing unit (1) according to any one of claims 1 to 10, **characterized in that** the steam supply line (2) is connected to a steam generation unit (13) and a valve (12) for controlling the flow of steam is arranged in the steam supply line (2).

12. The frothing unit (1) according to any one of claims 1 to 11, **characterized in that** the milk supply line (4) can be connected to a milk reservoir (14) or to a reservoir (15) for a cleaning liquid.

13. The frothing unit (1) according to any one of claims 1 to 12, **characterized in that** the outlet line (8)
i) has an inner diameter that widens in the direction of the outlet opening (9) and preferably has a conical geometry, and the outlet line (8) is preferably formed from a plastic; and/or
ii) has a length in the range of 40 to 80 mm and/or an inner diameter at the end adjacent to the mixing unit (5) in the range of 2 to 4 mm and/or an inner diameter at the outlet opening (9) in the range of 3 to 8 mm; and/or
iii) is arranged essentially perpendicularly to the mixing unit (5), particularly preferably at an angle of 90°, and the end of the outlet line (8) adjacent to the mixing unit (5) acts as an impact surface.

14. A beverage maker, in particular coffee machine, comprising a frothing unit according to any one of claims 1 to 13.

15. The beverage maker according to claim 14, **characterized in that** the beverage maker has no frothing chamber.

## Revendications

1. Unité de moussage (1) pour faire mousser du lait ou un mélange de lait et d'air, comprenant
• une conduite d'alimentation en vapeur (2) pour l'amenée de vapeur ou d'un mélange vapeur-air comprenant une buse de vapeur (3) avec une sortie de buse (3a),
• une conduite d'alimentation en lait (4) pour l'alimentation en lait ou en mélange lait-air,
• une unité de mélange (5) sous la forme d'un profilé creux avec une première zone d'écoulement (6) dotée d'une section transversale intérieure et une deuxième zone d'écoulement (7) dotée d'une section transversale intérieure, la section transversale intérieure de la deuxième zone d'écoulement (7) étant plus petite que celle de la première (6),
• une conduite de sortie (8) se raccordant directement à la deuxième zone d'écoulement (7) et comportant une ouverture de sortie (9) pour la mousse de lait,
dans laquelle la conduite d'alimentation en vapeur (2), la conduite d'alimentation en lait (4) et l'unité de mélange (5) sont reliées entre elles par un élément de liaison à 3 voies (10) et la buse de vapeur (3) est positionnée en alignement axial avec l'unité de mélange (5),
**caractérisée en ce que** la conduite d'alimentation en lait (4) et l'unité de mélange (5) sont constituées d'un tuyau,
dans lequel la première zone d'écoulement (6) de l'unité de mélange (5) a une longueur comprise entre 20 et 100 mm, et
dans lequel la deuxième zone d'écoulement (7) de l'unité de mélange (5) a une longueur comprise entre 100 et 1200 mm.

2. Unité de moussage (1) selon la revendication 1, **caractérisée en ce que** la buse de vapeur (3) est positionnée en alignement axial avec la conduite d'alimentation en vapeur (2) dans l'élément de liaison à 3 voies (10), la sortie de buse (3a) étant disposée dans la zone de la conduite d'alimentation en lait (4), de sorte que dans la première zone d'écoulement (6) de l'unité de mélange (5), le jet de vapeur est entouré par un écoulement de lait cylindrique.

3. Unité de moussage (1) selon l'une quelconque des revendications 1 ou 2, **caractérisée en ce que** l'élément de liaison à 3 voies (10) est une pièce en T.

4. Unité de moussage (1) selon l'une quelconque des revendications 1 à 3, **caractérisée en ce que** la première zone d'écoulement (6) présente une section transversale intérieure comprise entre 7 et 20 mm²
et/ou la deuxième zone d'écoulement (7) présente une section transversale intérieure comprise entre 3 et 7 mm².

5. Unité de moussage (1) selon l'une quelconque des revendications 1 à 4, **caractérisée en ce que** le rapport entre section transversale intérieure de la deuxième zone d'écoulement (7) et la section transversale intérieure de la première zone d'écoulement (6) est de 1:1 à 1:7, de préférence de 1 :1,5 à 1:4
et/ou le rapport entre la longueur de la première zone d'écoulement (6) et la longueur de la deuxième zone d'écoulement (7) est de 1 :1 à 1 :60, de préférence de 1:5 à 1:20.

6. Unité de moussage (1) selon l'une des revendications 1 à 5, **caractérisée en ce que** la première zone d'écoulement (6) et la deuxième zone d'écoulement (7) sont formées d'une seule pièce ou **en ce que** la première zone d'écoulement (6) et la deuxième zone d'écoulement (7) sont reliées l'une à l'autre par un élément de liaison (16), plus particulièrement un élément de liaison à 2 voies ou un élément de liaison à 3 voies, de préférence une pièce en T.

7. Unité de moussage (1) selon l'une quelconque des revendications 1 à 6, **caractérisée en ce que** l'unité de moussage (1)
(i) présente au moins un capteur de température (17) permettant de déterminer la température du lait et/ou de la vapeur, le capteur de température (17) étant disposé de préférence directement sur l'élément de liaison (16) entre la première et la deuxième zone d'écoulement ou en aval de cet élément de liaison (16) ; et/ou
(ii) ne comporte pas de chambre de moussage.

8. Unité de moussage (1) selon l'une quelconque des revendications 1 à 7, **caractérisée en ce que** le tuyau du conduit d'alimentation en lait (4) et de l'unité de mélange (5) est constitué d'une matière plastique, de préférence un fluoropolymère, en particulier choisi dans le groupe constitué par le PTFE, le PFA, le FEP et leurs combinaisons.

9. Unité de moussage (1) selon l'une quelconque des revendications 1 à 8, **caractérisée en ce que** l'unité de mélange (5) présente une section transversale cylindrique, rectangulaire ou ovale.

10. Unité de moussage (1) selon l'une quelconque des revendications 1 à 9, **caractérisée en ce qu'**une pompe (11) pour le transport du lait est disposée dans la conduite d'alimentation en lait (4).

11. Unité de moussage (1) selon l'une quelconque des revendications 1 à 10, **caractérisée en ce que** la conduite d'alimentation en vapeur (2) est reliée à une unité de production de vapeur (13) et **en ce qu'**une vanne (12) est disposée dans la conduite d'alimentation en vapeur (2) pour contrôler le flux de vapeur.

12. Unité de moussage (1) selon l'une quelconque des revendications 1 à 11, **caractérisée en ce que** le conduit d'alimentation en lait (4) peut être relié à un réservoir de lait (14) ou à un réservoir (15) prévu pour un liquide de nettoyage.

13. Unité de moussage (1) selon l'une quelconque des revendications 1 à 12, **caractérisée en ce que** le conduit de sortie (8)
(i) présente un diamètre intérieur qui s'élargit en direction de l'ouverture de sortie (9) et de préférence une forme conique, et le conduit de sortie (8) est de préférence composé d'une matière plastique ; et/ou
(ii) a une longueur comprise entre 40 et 80 mm et/ou un diamètre intérieur à l'extrémité adjacente à l'unité de mélange (5) compris entre 2 et 4 mm et/ou un diamètre intérieur à l'ouverture de sortie (9) compris entre 3 et 8 mm ; et/ou
(iii) est disposée sensiblement perpendiculairement à l'unité de mélange (5), de préférence avec un angle de 90°, et l'extrémité du conduit de sortie (8) adjacente à l'unité de mélange (5) fait office de déflecteur.

14. Préparateur de boissons, en particulier machine à café, contenant une unité de moussage selon l'une quelconque des revendications 1 à 13.

15. Préparateur de boissons selon la revendication 14, **caractérisé en ce que** le préparateur de boissons ne comporte pas de chambre de moussage.
